# EUROPEAN PATENT APPLICATION

(11) **EP 1 316 960 A1**
(43) Date of publication of application: **04.06.2003**
(21) Application number: 01250417.1
(22) Date of filing: 28.11.2001
(51) Int. Cl.: G11B 27/32, G11B 27/30, G06F 17/30, G11B 27/034, G11B 20/12

(54) **Method for recording data, and digital recorder**

(71) Applicant: DEUTSCHE THOMSON-BRANDT GMBH, 78048 Villingen-Schwenningen (DE)
(72) Inventor: Winter, Marco, 30173 Hannover (DE)
(74) Representative: Hartnack, Wolfgang, Dipl.-Ing.

(57) **Abstract**

Disclosed are a recorder, in particular a DVD-SR, and a method for recording data in a data format on a medium. The data format specifies at lease a first object type and a second object type and a maximum number of objects of the first object type and a maximum number of objects of the second object type. The method includes the following steps:
- inputting a request for recording the data;
- checking whether a sufficient number of first and/or second type objects are available for recording of the data;
- if the number of first and/or second type objects is not sufficient for recording the data, re-assigning data which has been previously recorded to objects of the first and/or the second object type in order to reduce the number of objects of the first and/or second object type.

## Description

The invention relates to the field of digital recording, and more particularly to DVD-SR.

### Background

DVD stands for 'Digital Versatile Disc' but is often referred to as 'Digital Video Disc'. DVD is a multi-application family of optical disc formats for read-only , recordable, and rewritable applications.

DVD physical formats include: DVD-ROM, which stands for Digital Versatile Disc (or Digital Video Disc) Read-Only-Memory. DVD-ROM is an American National Standards Institute (ANSI) standard. It can store almost any form of digital data.

DVD-R is the version of DVD on which data can be recorded once. DVD-R was originally a single format, but it has been split into DVD-R(G) and DVD-R(A) formats. DVD-R(G) - General - is intended for home or general-purpose use. DVD-R(A) - Authoring - is intended for professional DVD authoring.
The DVD standard includes three erasable variations: DVD-RAM, DVD-RW, and DVD+RW. Discs in these formats can be rewritten many times.

In addition to the physical formats for the above media there are also application formats: DVD-Video uses a specific set of file types and data types to deliver high-quality video and audio. DVD-Audio is a separate format from DVD-Video. DVD-Audio is the audio-only DVD format that primarily uses pulse code modulation (PCM). Further there are DVD-VR (video recording), DVD-AR (audio recording) and DVD-SR (stream capturing) formats as well as special formats for game players.

DVD-VR, DVD-SR and DVD-AR are specifications for recording non-digital video, streaming digitised video, and audio, respectively. These formats can be considered as representing application layers. The data layout 'sits' on the physical formats of the writable DVDS.

These standards have been specified by the DVD forum (see www.dvdforum.org) and can be obtained from Office of Secretary, DVD FORUM, Shiba Shimizu Bldg. 5F, 2-3-11, Shibadaimon, Minato-ku, Tokyo 105-0012, Japan.

### Invention

The invention is advantageous in that it allows making more efficient use of the available storage capacity of a recording medium, such as a DVD.

A problem to be solved by the invention is to provide an improved method for the recording of data and an improved digital recorder and computer program product, especially with respect to DVD-SR recording.
This problem is solved by applying the features of the independent claims. Advantageous additional embodiments of the invention are disclosed in the respective dependent claims.

For example, in the DVD-SR standard the number of objects of different types is restricted by the standard specification to the following quantities:

| | |
|---|---|
| Program Set (i.e. ORG_PGC) | 1 |
| Program (i.e. PG) | 99 |
| Play List (i.e. UD_PGC): | 99 |
| Stream Cell: | 999 for any ORG_PGC or UD_PGC |
| Entry Point: | 999 for any ORG_PGC or UD_PGC |
| Entry Point that has Primary Text: | 99 |
| Stream Object (i.e. SOB): | 999 |
| SOB Stream Information (SOB_STI): | 64 |

This means that a situation can occur where a user request for the recording of data on the medium is to be refused because no additional object of a certain required type or class is available because the maximum number of such objects has already been reached. This is true despite of the fact that even though the maximum number of objects of the required object type has been reached, the full storage capacity of the medium is not completely occupied.
In other words, even though the maximum number of objects of that object type has been reached, there is still empty space on the medium for the recording of data, which empty space however can not be used in the prior art because of the standard's restriction on maximum numbers of objects.

The invention is particularly advantageous in that it allows re-assigning data that has been recorded previously to objects in order to merge objects or to integrate one object within another object in order to reduce the number of objects, such that a user request for recording can be fulfilled if there is still unused recording capacity on the disc.

In accordance with a first embodiment of the invention, the number of objects is reduced by reducing the number of original stream objects (SOB). This can be done by merging two or more SOBs having the same type, i.e. having the same SOB_STI.
In accordance with a further embodiment only such SOBs are merged which have no primary text, or only one of which has primary text. Optionally, the spaces inbetween the SOBs can be marked as 'temporary erased' (TE). Further, time stuffing can be employed by 'filling in' the space between SOBs to be merged by empty stream object units (SOBUs). This way one common mapping list (MAPL) is enabled.

Preferably such SOBs should be merged that do not require additional time stuffing. If there are no further mergeable SOBs without time stuffing, SOBs should be merged that can accommodate SOBUs by enlarging already existing contiguous data areas (CDA). This way the creation of CDA fragments is prevented.

In case that primary text (PRM_TXTI) is present in an SOB to be merged an entry point should be created with PRM_TXTI on the corresponding position of the merged SOB. This way the PRM_TXTI is preserved.

In accordance with a further preferred embodiment of the invention, the number of stream cells is reduced by merging neighbouring stream cells. Especially temporary erased cells that are neighbouring can be merged. Another option is the permanent erasure of 'temporary erased' cells.

Further a user defined program chain (UD_PGCI) can be created which covers the normal stream cells of a SOBs. The normal stream cells and the temporary erased cells of this SOB are merged to normal stream cells, which means that the temporary erased status of the temporary erased cells of this SOB is changed to normal. The rendering of this kind of UD_PGCI replaces the rendering of this SOB without the temporary erased cells.

In accordance with a further preferred embodiment of the invention the number of UD_PGCIs is reduced. This can be done by erasing UD_PGCIs which occur more than once. Further neighbouring UD_PGCIs can be combined, especially if the UD_PGCIs following the first UD_PGCI have no play list. It is particularly advantageous to merge such UD_PGCIs that:
- are short,
- have the same application ID, and
- have no assigned play list, except for the first UD_PGCI.

In principle, the inventive method is suited for recording data in a data format on a medium, said data format specifying at least a first object type and a second object type and a maximum number of objects of the first object type and a maximum number of objects of the second object type, the method including the steps of:
- inputting a request for the recording of said data;
- checking whether a sufficient number of first and/or second type objects are available for recording the data;
- if the number of first and/or second type objects is not sufficient for recording the data, re-assigning data which has been previously recorded to objects of the first and/or the second object type in order to reduce the number of objects of the first and/or second object type.

### Drawing

Exemplary embodiments of the invention are described with reference to the accompanying drawing, which shows in:

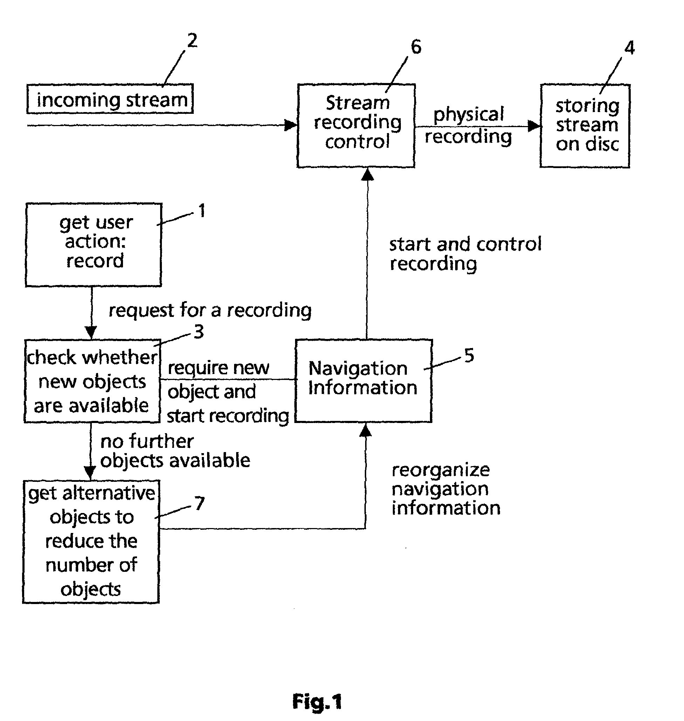

- Fig. 1: schematic block diagram of an embodiment of a digital recorder in accordance with the invention.

### Glossary of terminology and abbreviations

### Application Device

Denotes a device devoted to one (or more) digital bitstream services, with a possibility to connect it to a DVD Streamer. The Application Device can operate as a source of bitstreams to be recorded in the streamer, or it can operate as a sink device consuming the bitstreams when they are played back from the streamer. Physically, the Application Device and the Streamer can be imagined as separate instruments or united into one.

### Application Packet (AP_PKT)

AP_PKT denotes bitstream pieces coming from the Application Device upon recording or being transferred to the Application Device upon playback, as they are contained in the transport multiplex. During one recording, the size of the AP_PKTs is constant.

### Cell (C)

Denotes a data structure to represent a portion of a program. A Cell in the Original PGC is called "Original Cell" and a Cell in a User Defined PGC is called "User Defined Cell". Every Program Set consists of at least one Original Cell. Every Part of Program in every Play List consists of at least one User Defined Cell. In this specification, only "Stream Cell" (SC) are defined. Each Stream Cell refers to a part of a recorded bitstream. When "Cell" is used without any further specifiers, "Stream Cell" shall always be the meaning.

### Cell number (CN)

Denotes the consecutive numbers assigned to Cells in PGC. These numbers range from "1" to "999".

Contiguous Data Area (CDA)

Denotes a sequence of contiguous sectors in a disc. A CDA consists of multiple ECC blocks. Each Stream Object is allocated in a chain of CDAs. The minimum size of a CDA is 2 MB except for the first CDA and the last CDA in a chain of CDAs.

### Entry Point (EP)

Denotes an entering position within a Program in case of Original PGC, and an entering position within a part of Program in case of User Defined PGC. Each PGC may have its own set of Entry Points, respectively. Entry Points are stored as part of the Cell Information. Entry Points are used during playback for skipping a part of recorded content.

### Mapping List (MAPL)

Denotes a data table used to convert from a given Application Packet Arrival Time (APAT) inside a Stream Object (SOB) to the address of SOBU, inside the SOB, where the data with the desired APAT can be found.

### Navigation Data

Denotes those data which are provided to control recording, playing back, and editing bitstreams (SOBs). Navigation Data corresponds to "Real Time Recording Stream manager" (RTR_SMG).

### Original Cell: see Cell (C)

Denotes a Cell which belongs to the Original PGC.

### Original PGC (ORG_PGC) : see Program Chain (PGC)

Denotes the Navigation Data which describes the Program Set. ORG_PGC is a chain of Programs, and includes stream data stored in the .SRO file.

### Play List (PL)

Denotes a list of Part of Programs, which allows the user to define any playback sequences. A Play List is defined as a User Defined PGC (UD_PGC).

### Primary Text Information (PRM_TXTI)

Denotes text information which has one common character set, "ISO/IEC646:1983 (ASCII code)", for worldwide use of a disc. The information may also be described in another character set. PRM_TXTI may be described for Programs, Play Lists, and selected Entry Points, and is used to identify them, e.g. for a player menu.

### Program (PG)

Denotes a logical unit of recorded content, which is recognised or defined by the user. A Program in the Program Set consists of one or more Original Cells. Programs are defined only in the Original PGC.

### Program Chain (PGC)

Denotes a generic, conceptual unit. In case of the Original PGC, PGC represents a chain of Programs which corresponds to the Program Set, and in case of User Defined PGC, it represents a chain of Part of Programs which corresponds to a Play List. The total playback of a PGC is equivalent to a sequence of Cell playbacks according to the definitions in the Program Chain Information (PGCI).

### Stream Cell (SC): see Cell (C)

Denotes a Cell which points to part of a recorded bitstream within a SOB.

### Stream Object (SOB)

Denotes the presentation data for recorded bitstreams. A maximum number of "999" SOBs may be recorded in the "SR_TRANS.SRO" file.

### Stream Object Unit (SOBU)

Denotes the basic unit into which SOBs are organised. Every SOB consists of a chain of SOBUs. Especially after editing, the first and/or last SOBU of a SOB may contain other data which do not belong to the valid part of the SOB. SOBUs are characterised by their constant size (32 sectors or 2 ECC blocks) rather than by any presentation time or other.

### Text Data Manager (TXTDT_MG)

Denotes supplementary text information which may be stored together with a Primary Text Information (PRM_TXTI) in Play List and Program. The presence of TXTDT_MG on disc and its usage in Streamer products are optional. The table TXTDT_MG starts with Text Data Information (TXTDTI), followed by Item Text Search Pointers (IT_TXT_SRPs), followed by Item Texts (IT_TXTs).

### User Defined Cell: see Cell (C)

Denotes a Cell which belongs to a User Defined PGC, and corresponds to a Part of Program.

### User Defined PGC (UD_PGC): see Program Chain (PGC)

Denotes a chain of Part of Programs. However, it contains Navigation data only, and each Part of Program refers to stream data belonging to the Original PGC. Therefore, creating or deleting a User defined PGC does not affect the Original PGC at all.

### Exemplary embodiments

Figure 1 shows a block diagram of a recorder, such as a DVD-SR stream recorder. The recorder has a user interface 1 which allows a user to input a recording request for an incoming stream 2. The request is input to a program module 3 which checks whether new objects are available on the disc which is inserted in a physical recorder 4. The incoming stream 2 can originate from any Application Device.

This means that the program module 3 checks whether objects of a certain object type required for the recording are still available or whether the maximum number of such objects has already been reached by previous recordings on the disc.
For example, a new SOB is required for the recording. If the maximum number of SOBs has not been reached the recording can immediately start by creating a corresponding navigation information 5 and by correspondingly controlling the stream recording controller 6. By means of the stream recording controller 6 the incoming stream 2 is physically recorded on the disc through physical recorder 4.

In case the maximum number of SOBs has been reached a program module 7 is invoked in order to reduce the number of objects on the disc. In order to reduce the number of objects on the disc the program module 7 can employ any of the above described strategies.
For example, program module 7 can reduce the number of original SOBs by merging two or more SOBs of the same type to a single SOB. This way the number of SOBs is reduced and a new SOB becomes available for the purpose of recording the incoming stream 2.
Other strategies for reducing the number of objects are reducing the number of original SCIs by the merging of normal stream cells and/or temporarily erased cells which are neighboring. Another strategy is reducing the number of UD_PGCIs.

As a result of the re-assignment of data to objects by the program module 7 the navigation information 5 is reorganised. The reorganised navigation information is written to the disc by means of stream recording controller 6 and physical recorder 4.

## Claims

1. Method for recording (4, 6) data in a data format on a medium, said data format specifying at least a first object type and a second object type and a maximum number of objects of the first object type and a maximum number of objects of the second object type, the method including the steps of:
- inputting (1) a request for the recording of said data;
- checking (3) whether a sufficient number of first and/or second type objects are available for recording the data;
- if the number of first and/or second type objects is not sufficient for recording the data, re-assigning (7, 5) data which has been previously recorded to objects of the first and/or the second object type in order to reduce the number of objects of the first and/or second object type.

2. Method according to claim 1, the data format being DVD-SR, DVD-VR or DVD-AR.

3. Method according to claim 2, comprising re-assigning of data which has been previously recorded by merging of at least two stream objects (SOB) having the same stream object type.

4. Method according to claim 3, wherein said merged at least two stream objects (SOB) have no primary text information (PRM_TXTI) or only one of said merged at least two stream objects (SOB) has primary text information (PRM_TXTI).

5. Method according to claim 3 or 4, further comprising time stuffing empty stream object units (SOBU) between said at least two stream objects (SOB) in order to enable the creation of a single mapping list (MAPL) for merging said at least two stream objects (SOB) into a single stream object (SOB).

6. Method according to claim 3, 4 or 5, further comprising assigning an entry point (EP) to the merged single stream object (SOB) comprising said at least two stream objects (SOB) for maintaining the primary text information (PRM_TXTI) of one of said merged stream objects (SOB).

7. Method according to one of claims 2 to 7, further comprising merging neighbouring temporary erased cells (TE cells).

8. Method according to one of claims 2 to 7, further comprising reducing the number of user-defined program chains (UD_PGCI), preferably by merging neighbouring user-defined program chains, only one of the user-defined program chains to be merged having a PlayList.

9. Digital recorder including means for performing a method in accordance with one of claims 1 to 8.

10. Computer program product for performing a method in accordance with one of claims 1 to 8 when the program is executed on a digital recorder.
